# EUROPEAN PATENT SPECIFICATION

(11) **EP 4 517 907 B1**
(45) Date of publication and mention of the grant of the patent: **02.12.2026**
(21) Application number: 23880295.3
(22) Date of filing: 20.10.2023
(51) Int. Cl.: H01M 10/0583, H01M 4/134, H01M 10/052

(54) **ELECTRODE ASSEMBLY AND ELECTROCHEMICAL DEVICE INCLUDING THE SAME**
ELEKTRODENANORDNUNG UND ELEKTROCHEMISCHE VORRICHTUNG DAMIT
ENSEMBLE ÉLECTRODE ET DISPOSITIF ÉLECTROCHIMIQUE LE COMPRENANT

(30) Priority: 21.10.2022 KR 20220136198; 31.05.2023 KR 20230070472; 18.10.2023 KR 20230139636
(43) Date of publication of application: 05.03.2025
(73) Proprietor: LG Energy Solution, Ltd., Seoul 07335 (KR)
(72) Inventor: LEE, Junghoon, Daejeon 34122 (KR); KWON, Soon Kwan, Daejeon 34122 (KR)
(74) Representative: Goddar, Heinz J.
(86) International application number: PCT/KR2023/016371
(87) International publication number: WO 2024/085720

(56) References cited:
- CN-A- 111 244 528
- CN-A- 111 244 528
- JP-A- 2010 199 281
- KR-A- 20140 035 646
- KR-A- 20200 095 896
- KR-A- 20210 112 193
- KR-B1- 101 278 739
- US-B2- 7 150 768

## Description

### [Technical Field]

The present invention relates to an electrode assembly and an electrochemical device comprising same. More particularly, the present invention relates to an electrode assembly comprising lithium metal in a negative electrode and an electrochemical device comprising same.

This application claims the benefit of priority to Korean Patent Application No. 10-2022-0136198 filed on October 21, 2022, Korean Patent Application No. 10-2023-0070472 filed on May 31, 2023, and Korean Patent Application No. 10-2023-0139636, filed on October 18, 2023.

### [Background Art]

CN 111 244 528 A belongs to the field of chemical power sources, and specifically relates to a lithium-sulfur battery cell, a lithium-sulfur battery and a preparation method thereof.

JP 2010 199281 A relates to an electricity storage device in which a negative electrode composite provided with an ion supply source is incorporated, and a method for manufacturing the same.

KR 2014 0035646 A relates to a method for stacking a cell inside a secondary battery and a cell stack manufactured by using the same. In detail, a separator formed in a zigzag folded form and a first electrode plate and a second electrode plate are alternately inserted into a portion in which the separator is folded.

In recent years, there has been a growing interest in energy storage technology. As application areas are expanding to the range from mobile phones, camcorders and laptop PCs to energy for electric vehicles, efforts for research and development are being embodied. In this regard, electrochemical devices are one of the most promising areas, and especially, the development of secondary batteries is drawing attention as the batteries with miniaturization and light weight, and capable of charging and discharging with high capacity, in light of the recent trend toward miniaturization and light weight of electronic devices.

Secondary batteries are also categorized by the structure of the electrode assembly consisting of positive electrode/separating film/negative electrode. For example, electrode assemblies are categorized into jelly-roll (wound) electrode assemblies, which are the wound long sheet of positive electrodes and negative electrodes with separating films, and stacked electrode assemblies, wherein multiple positive electrodes and negative electrodes cut into predetermined sized units with separating films are stacked sequentially.

However, these conventional electrode assemblies suffer from several problems.

First, the jelly-roll electrode assembly is made by winding the long sheet of positive electrodes and negative electrodes in a dense state, thereby to have a cylindrical or elliptical cross-section. In such a structure, stresses caused by the expansion and contraction of the electrodes during charge and discharge accumulate in the electrode assembly, and when such stress accumulation exceeds a certain limit, deformation of the electrode assembly occurs. Furthermore, the deformation of the electrode assembly may cause uneven spacing between the electrodes, resulting in a sharp decrease in the performance of the battery, and an internal short circuit may occur, threatening the safety of the battery. Furthermore, since the jelly-roll electrode assembly requires winding a long sheet of the positive electrodes and negative electrodes, it is difficult to wind the positive electrodes and negative electrodes quickly while maintaining a constant spacing between the positive electrodes and negative electrodes, resulting in a decrease in productivity.

Second, the stackable electrode assembly requires sequential stacking of multiple positive electrode units and negative electrode units. In this process, since a separate electrode plate transfer process is required to manufacture the unit, and the sequential stacking process requires a lot of time and effort, the stackable electrode assembly has the problem of low productivity.

To solve these problems, a stackable-foldable electrode assembly with an advanced structure that is a hybrid of the jelly-roll type and stackable type has been developed. The stackable-foldable electrode assembly has a structure in which bi-cells or full cells stacked with separating films between the positive electrodes and negative electrodes of a predetermined unit are wound using a long continuous separating film sheet (foldable separating film).

The stackable-foldable electrode assembly typically connects the electrodes of each layer by extending separating films that are easier to fold, rather than extending the electrodes. In this process, the electrodes of each layer are supplied in a cut state for formation of the electrode assembly, as in the stacked electrode assembly. In the relevant art, if the secondary battery is composed of materials that are not easily cut or folded among a variety of conventional electrode materials for secondary batteries in the art, the general stackable-foldable electrode assembly is more suitable. On the other hand, lithium metal, which is well-known as a negative electrode material for secondary batteries in the art, may not be suitable for conventional stackable-foldable electrode assemblies because it is not easy to be processed by, such as, cutting, due to its physical properties such as high ductile and viscosity, and it is relatively easy to be folded.

After continuous research on the structure of electrode assemblies, the inventor(s) of the present invention has designed a structure suitable for electrode assemblies, especially containing lithium metal as a negative electrode, and has completed the present invention.

### [patent reference]

(Patent reference 1) Korean Patent No. 10-2023530

### [Disclosure]

### [Technical Problem]

The present invention seeks to provide an electrode assembly with a novel structure suitable for an electrode assembly comprising lithium metal as a negative electrode, and an electrochemical device comprising same.

### [Technical Solution]

According to a first aspect of the present invention, the present invention provides an electrode assembly comprising a negative electrode structure and a plurality of positive electrodes.

The negative electrode structure includes first and second separating films, and a lithium metal layer interposed between the first and second separating films.

The negative electrode structure is divided into a plurality of stack portions, a plurality of folding portions, and first and second wrapping portions in accordance with their positions in the electrode assembly.

The stack portion and the folding portion are located alternately between the first and second wrapping portions located at the end portion, respectively, of the negative electrode structure, and the first and second wrapping portions abut the stack portion, respectively.

The electrode assembly has the plurality of stack portions sequentially positioned side-by-side in the thickness direction by the folding portion, and at least one positive electrode is positioned between the stack portions, which are adjacent to each other in the thickness direction.

The electrode assembly has a structure in which the outer faces in the thickness direction and the longitudinal direction are surrounded by first and second wrapping portions, or first and second wrapping portions and at least one outermost stack portion.

In the negative electrode structure, the lengths of the lithium metal layer and the first and second separating films are substantially the same.

In one embodiment of the present invention, in the electrode assembly, the plurality of stack portions and the plurality of positive electrodes become closer to each other in the thickness direction by the wrapping portion.

In one embodiment of the present invention, the first wrapping portion and the second wrapping portion do not overlap each other.

In one embodiment of the present invention, the first wrapping portion and the second wrapping portion have the same length as each other.

In one embodiment of the present invention, the first wrapping portion and the second wrapping portion are secured to different outermost stack portions.

In one embodiment of the present invention, in the electrode assembly, one positive electrode is located between the stack portions adjacent to each other in the thickness direction, and a total number of positive electrodes located between the stack portions is 2n (wherein n is a natural number).

In one embodiment of the present invention, in the electrode assembly, the positive electrode includes a positive electrode active material layer, and a current collector supporting the positive electrode active material layer, and the negative electrode structure does not include a current collector supporting a lithium metal layer.

In one embodiment of the present invention, in the negative electrode structure, an end of the first wrapping portion is located on a stack portion abutting the second wrapping portion such that the first wrapping portion turns to wrap around one side of the adjacent electrode assembly, and an end of the second wrapping portion is located on a stack portion abutting the first wrapping portion such that the second wrapping portion turns to wrap around one side of the adjacent electrode assembly.

In one embodiment of the present invention, the electrode assembly further comprises a fixing member securing an end of each of the first and second wrapping portions to the outermost stack portion.

In one embodiment of the present invention, the length of the folding portion in the negative electrode structure is from 2 to 10 times the sum of the thicknesses of the positive electrode and the negative electrode structure.

In one embodiment of the present invention, the length of the folding portion in the negative electrode structure is from 2 to 10 times the vertical distance between the end of the positive electrode and the lateral wrapping portion surrounding it.

In one embodiment of the present invention, the folding portion has an asymmetrical shape with respect to a plane along the longitudinal direction.

In one embodiment of the present invention, the thickness of the lithium metal layer in the negative electrode structure is from 50% to 90% based on the overall thickness of the negative electrode structure.

In one embodiment of the present invention, the thickness of the positive electrode is greater than the thickness of the negative electrode structure.

In one embodiment of the present invention, the fixing member is an insulating tape.

In one embodiment of the present invention, a center point of the length of the folding portion is not aligned with a center point of the thickness of the positive electrode that the folding portion surrounds.

In one embodiment of the present invention, the first wrapping portion and the second wrapping portion, each located on the stack portion, do not overlap each other in the thickness direction.

In one embodiment of the present invention, the first wrapping portion and the second wrapping portion, each located on the stack portion, overlap each other in the thickness direction.

In one embodiment of the present invention, the end of the first wrapping portion and the end of the second wrapping portion are located on the same line in the thickness direction.

According to a second aspect of the present invention, the present invention provides an electrochemical device comprising the electrode assembly described above.

In one embodiment of the present invention, the electrochemical device is a lithium secondary battery.

In one embodiment of the present invention, the electrochemical device is a lithium-sulfur battery.

### [Effects of the present invention]

An electrode assembly according to one embodiment of the present invention is manufactured by utilizing one negative electrode structure in a continuous form interposed between two separating films with a negative electrode comprising lithium metal, thereby minimizing the cutting of lithium metal, and accordingly, improving process efficiency in manufacturing an electrode assembly.

Furthermore, by adjusting the methods and conditions of stacking, folding, and wrapping in accordance with the material properties of the negative electrode structure, not only can the manufactured electrode assembly have a stable structure, but also the performance of the battery can be improved.

### [Description of Drawings]

FIG. 1 is a schematic illustration of a structure of a negative electrode structure including a stack portion, a folding portion, and a wrapping portion, according to one embodiment of the present invention.
FIG. 2 is a schematic illustration of the structure of an electrode assembly including a negative electrode structure and a positive electrode, in accordance with one embodiment of the present invention.
FIG. 3 is a schematic illustration of the structure of an electrode assembly with the end of the wrapping portion fixed with a fixing member to the negative electrode structure, in accordance with one embodiment of the present invention.
FIG. 4 is a zoomed-in schematic illustration of a folding portion of the electrode assembly according to one embodiment of the present invention.
FIG. 5 is a zoomed-in schematic illustration of a portion of the electrode assembly in accordance with one embodiment of the present invention where the end of the positive electrode and the lateral wrapping portion are located.

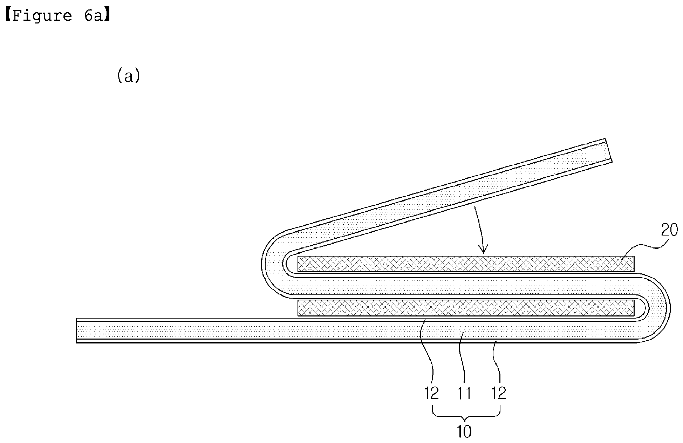

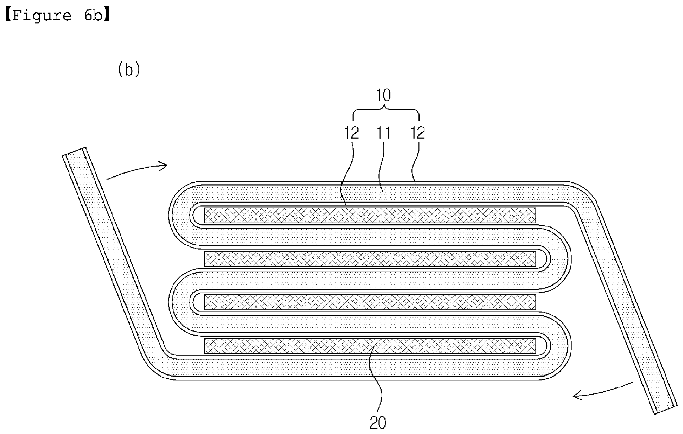

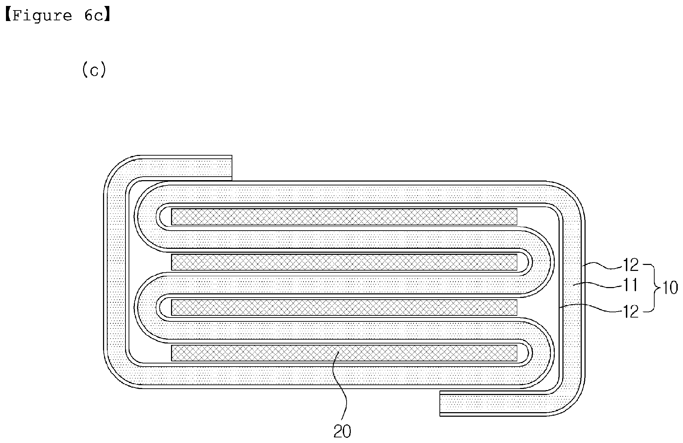

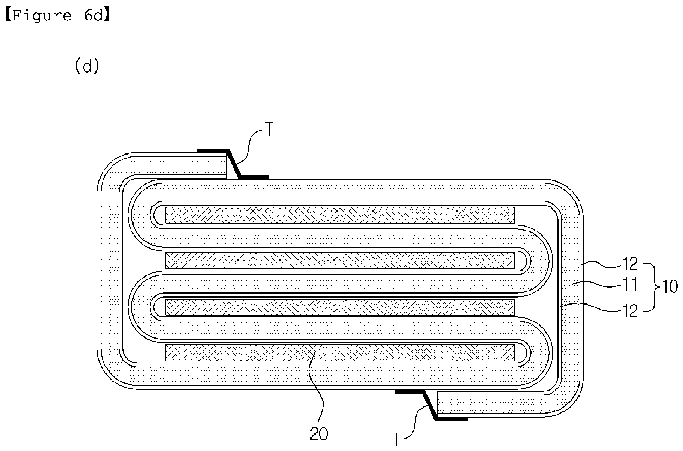

FIG. 6 is a diagram schematically illustrating a process and state in a manufacturing process of the electrode assembly according to one embodiment of the present invention. Here, FIG. 6a schematically illustrates a process of folding a negative electrode structure to form an electrode laminate in which the positive electrode and the negative electrode structure are alternately stacked, and FIG. 6b schematically illustrates a process of wrapping one side of the electrode laminate with the first and second wrapping portions after the electrode laminate is formed. Furthermore, FIG. 6c schematically illustrates a state in which the electrode assembly is completed after wrapping, with the ends of the first and second wrapping portions located on the stack portion, and FIG. 6d schematically illustrates a state in which the ends of the first and second wrapping portions are fixed.
FIG. 7 is a graph depicting the results of measuring the cycle-by-cycle Coulombic efficiencies of the lithium secondary batteries including each of the electrode assemblies manufactured according to Example 1 and Comparative Example 1.

### [Best Mode]

The detail of the embodiment of the present invention is provided in the following descriptions. It should be noted that in assigning reference numerals to the components in each drawing, identical components, even in different drawings, are given the same numerals as much as possible. In addition, in describing the embodiments, if a detailed description on a related known constitution or feature is deemed to interfere with an understanding of the embodiments, the detailed description is omitted.

In addition, terms such as first, second, A, B, (a), (b), and the like may be used to describe components of the embodiments. Such terms are intended only to distinguish one component from another, and the nature, sequence or order of such components is not limited by such terms. When a component is described as being "connected," "coupled," or "abutted" to another component, it is to be understood that the component may be directly connected or contacted to the other component, but another component may be "connected," "coupled," or "abutted" between these components.

Components included in one embodiment, and components having common functions, are described using the same terms in other embodiments. Unless otherwise indicated, descriptions in one embodiment may be applied to other embodiments, and specific descriptions which are redundant are omitted.

The present invention relates to an electrode assembly, which improves problems that can occur when applying lithium metal as a negative electrode to a conventional stackable-foldable electrode assembly structure to provide an electrode assembly with a novel structure suitable for using lithium metal as a negative electrode. By minimizing the processing of lithium metal, the electrode assembly according to the present invention can not only improve the processability of the assembly process, but also increase the reliability of the manufactured product. Furthermore, the electrode assembly has a structure that can maximize the utilization of the positive electrode included in the electrode assembly, which can contribute to improving the performance of the battery.

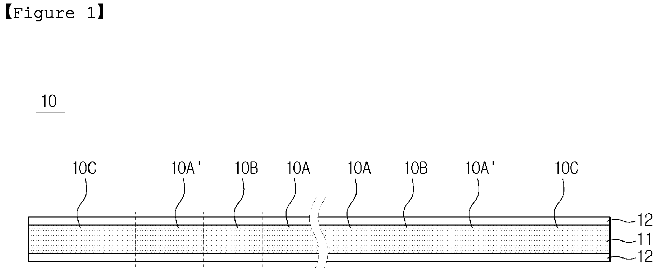

The terms "longitudinal direction", "width direction" and "thickness direction" (or "height direction") are used in this specification. FIGS. 1 to 6 are frontal views, and based on these frontal views, the "longitudinal direction" indicates a side-to-side direction, the "width direction" indicates a back-and-forth direction, and the "thickness direction" (or "height direction") indicates an up-and-down direction.

As used herein, the term "adjacent" means the subject that is closest to the reference among the plurality of subjects referred to thereby. Adjacent subject is not necessarily contacted to the reference.

An electrode assembly according to one embodiment of the present invention includes a positive electrode, a negative electrode and a separating film. In the electrode assembly, the positive electrode and the separating film are not particularly limited as long as they are materials commonly used in the art, but the negative electrode comprises lithium metal. As used herein, lithium metal can be broadly construed even if lithium is added with a certain component or is an alloy with a certain metal, as long as it does not significantly differ in properties from lithium metal and can be applied to conventional electrode assemblies, which causes the same problems as lithium metal. As used herein, the negative electrode may be referred to as a lithium metal layer in that it includes lithium metal, and the negative electrode and the separating film may be referred to as a negative electrode structure in that they are provided as a single integral constitution.

According to one embodiment of the present invention, the negative electrode is interposed between two separating films to form a negative electrode structure. The two separating films comprising the negative electrode structure may be referred to herein as first and second separating films. The negative electrode structure has a longitudinally extending structure, and the electrode assembly includes only one negative electrode structure. The negative electrode structure with the longitudinally elongated structure is folded to form a basic electrode assembly structure, such as fixing a positive electrode therein.

According to one embodiment of the present invention, the negative electrode structure includes a plurality of stack portions, a plurality of folding portions, and two wrapping portions in accordance with their positions in the electrode assembly. In this specification, the two wrapping portions included in the negative electrode structure may be named first and second wrapping portions. To facilitate an understanding of the structure of the negative electrode structure, FIG. 1 provides an exemplary structure of a negative electrode structure including a stack portion, a folding portion, and a wrapping portion. In the negative electrode structure (10), the stack portions (10A, 10A'), the folding portion (10B), and the wrapping portion (10C) are units that distinguish positions having different functions depending on the longitudinal direction of the negative electrode structure (10). The stack portions (10A, 10A'), the folding portion (10B), and the wrapping portion (10C) are not distinguished by a material other than a position.

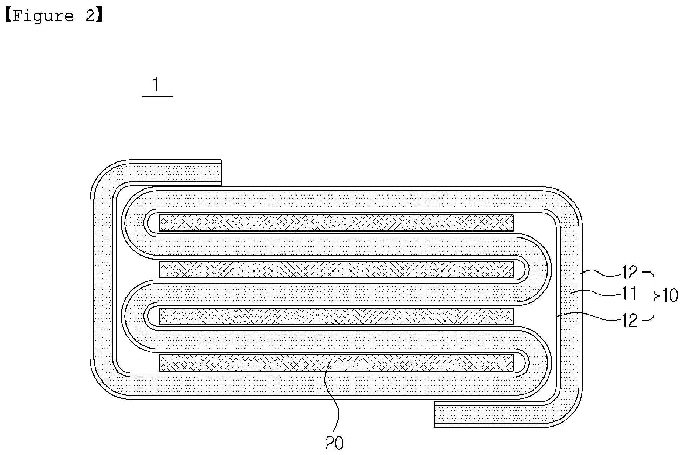

The stack portions (10A, 10A') refer to the negative electrode structure (10) at the position where the positive electrodes are stacked, and primarily have a straight shape in FIG. 2. The folding portion (10B) refers to the negative electrode structure (10) in the position to connect the stack portions to each other, and has a predominantly curved shape in FIG. 2. The folding portion (10B) may also be named a bending portion. The wrapping portion (10C) refers to a negative electrode structure in the position to wrap the stacked structure of the positive electrode and the negative electrode structure from the point where the top or bottom outermost stack portion (10A') ends, and has straight and curved shapes in FIG. 2.

As shown in FIG. 1, the negative electrode structure (10) has wrapping portions (10C) at both ends relative to the longitudinal direction. That is, two wrapping portions (10C) are located at each of the longitudinal ends of the negative electrode structure (10). Furthermore, each of the wrapping portions (10C) contacts an outermost stack portion (10A'), and between the outermost stack portions (10A'), the folding portion (10B) and the stack portion (10A) are located alternately. Since the lengths of the stack portions (10A, 10A') are substantially equal to the length of the positive electrode, the length of each stack portion (10A, 10A') is substantially the same.

The two wrapping portions (10C) located at both ends of the negative electrode structure (10) may have different lengths. In order to distinguish the two wrapping portions (10C), the wrapping portion (10C) located at the point where the stacking begins is named the first wrapping portion, and the wrapping portion (10C) located at the point where the stacking ends is named the second wrapping portion. For example, in FIG. 1, if the stack is started from the left portion, the wrapping portion (10C) located at the left end is the first wrapping portion, and the wrapping portion (10C) located at the right end is the second wrapping portion. The first wrapping portion and the second wrapping portion do not necessarily have the same length, as long as they can wrap around one side of the interior of the electrode assembly. However, by adjusting the process conditions in a repeated process to equalize the lengths of the first wrapping portion and the second wrapping portion so that the electrode assembly has a symmetrical structure, the structural stability of the electrode assembly can be increased. According to one embodiment of the present invention, the first wrapping portion and the second wrapping portion have the same length as each other.

The negative electrode structure (10) together with a plurality of positive electrodes forms an electrode assembly. For better understanding of the structure of the electrode assembly, FIG. 2 provides an exemplary structure of an electrode assembly including a negative electrode structure and a positive electrode. Since the negative electrode structure (10) includes a negative electrode (11) and a separating film (12), the electrode assembly (1) includes a positive electrode (20), a negative electrode (11) and a separating film (12).

According to one embodiment of the present invention, the electrode assembly (1) has a plurality of stack portions (10A, 10A') sequentially positioned side by side in the thickness direction by the folding portion (10B), and at least one positive electrode is positioned between the stack portions (10A, 10A') adjacent to each other in the thickness direction. According to one embodiment of the present invention, the electrode assembly (1) has a structure in which the exterior in the thickness direction and the longitudinal direction is surrounded by the first and second wrapping portions (10C) or the first and second wrapping portions and at least one outermost stack portion (10A'). In other words, the interior of the electrode assembly (1) has a structure in which the stack portions (10A, 10A') of the negative electrode structure and the positive electrode (20) are stacked sequentially in an alternating manner. In this case, only one positive electrode (20) is located between the stack portions (10A, 10A') of the negative electrode structure, respectively. Furthermore, the exterior of the electrode assembly (1) is surrounded by at least one stack portion (10A') of the negative electrode structure and two wrapping portions (10C) of the negative electrode structure. The interior and exterior of the electrode assembly (1) are distinguished for the purpose of understanding the structure of the electrode assembly (1) according to the present invention, and in FIG. 2, the layer exposed to the outside of the electrode assembly (1) in the thickness direction and the longitudinal direction indicates the exterior of the electrode assembly (1), and the inner portion of the exterior of the electrode assembly (1) indicates the interior of the electrode assembly (1). In the negative electrode structure (10), since the stack portions (10A, 10A') are the negative electrode structure (10) at a position where the positive electrodes are stacked, and the wrapping portion (10C) starts from the point where the top or bottom outermost stack portion (10A') ends, when an end of the first wrapping portion (10C) is located on top of the outermost stack portion (10A'), as shown in FIG. 2, a portion of the outermost stack portion (10A') may be located on the exterior of the electrode assembly (1), and a remaining portion of the outermost stack portion (10A') may be located on the interior of the electrode assembly (1). Moreover, when an end of the second wrapping portion (10C) is located on the bottom outermost stack portion (10A'), a portion of the bottom outermost stack portion (10A') may be located on the exterior of the electrode assembly (1), and a remaining portion of the bottom outermost stack portion (10A') may be located on the interior of the electrode assembly (1). Thus, as used herein, an outermost stack portion located inside or outside may refer to all or a portion of one stack portion. Unlike FIG. 2, if one of the first and second wrapping portions (10C) covers the entire outermost stack portion (10A'), the exterior of the electrode assembly (1) may be formed with only a first or second wrapping portion (10C). The plurality of folding portions (10B) are wrapped by the wrapping portion (10C) so that they are not exposed to the outside in the thickness direction and the longitudinal direction.

Since the electrode assembly (1) according to one embodiment of the present invention has the stack portions (10A, 10A') of the negative electrode structure (10) and the positive electrode (20) stacked alternately and sequentially therein, the negative electrode structure (10) including the folding portion (10B) has a zigzag shape. In other words, the folding portion (10B), which are located sequentially from the stack portion (10A') in contact with the first or second wrapping portion of the negative electrode structure (10), is located alternately on the left or right side of the electrode assembly (1). If the stack portions (10A, 10A') of the negative electrode structure (10) and the positive electrode (20) are not stacked alternately, and two or more of the stack portions or the positive electrodes are stacked successively, a potential difference may not occur between the successively stacked layers, and the efficiency of the battery may be reduced.

According to one embodiment of the present invention, in the electrode assembly (1), the plurality of stack portions (10A, 10A') and the plurality of positive electrodes (20) become closer to each other in the thickness direction by the first and second wrapping portions (10C). The first and second wrapping portions (10C) can wrap the interior of the electrode assembly (1) with a higher tension compared to the stack portions (10A, 10A') or the folding portion (10B), which causes the internal constitutions of the electrode assembly (1) to be closer to each other in the thickness direction. When the internal constitutions of the electrode assembly (1) become closer to each other in the thickness direction by this method, the internal constitutions of the electrode assembly (1) become inevitably closer to each other in the longitudinal direction. However, even if the internal constitutions of the electrode assembly (1) become closer to each other in the thickness direction and the longitudinal direction, there may be a certain level of voids around the folding portion (10B) due to the structure of the electrode assembly (1).

According to one embodiment of the present invention, the first wrapping portion and the second wrapping portion do not contact each other, but are fixed on different outermost stack portions (10A') of the negative electrode structure. In other words, the first wrapping portion and the second wrapping portion do not overlap in forming the exterior of the final electrode assembly. If the first wrapping portion and the second wrapping portion overlap, an unnecessary negative electrode structure is used as much as the overlapping portion, which is undesirable in terms of material optimization. As described above, the end of the first wrapping portion and the end of the second wrapping portion may be located on top of the stack portion, and the stack portion on which the end of the first wrapping portion is located and the stack portion on which the end of the second wrapping portion is located may be different in order to form an efficient structure of the electrode assembly.

According to one embodiment of the present invention, in the electrode assembly (1), one positive electrode is located between the stack portions (10A, 10A') which are adjacent to each other in the thickness direction, and the total number of positive electrodes (20) located between the stack portions (10A, 10A') is 2n (where n is a natural number). Since there is only one positive electrode (20) between the stack portions (10A, 10A') in the electrode assembly (1), the number of total positive electrodes herein refers to the total number of positive electrodes in the same situation, and does not mean that 2n positive electrodes are stacked between the stack portions. For example, in FIG. 2, the total number of positive electrodes located between the stack portions is 4. In the electrode assembly according to one embodiment of the present invention, all of the positive electrodes (20) are located between the stack portions. The upper limit of the number of total positive electrodes (20) is not particularly limited and may be adjusted within the conventional range in the art. When the number of total positive electrodes (20) located between the stack portions (10A, 10A') is 2n, the end of the first wrapping portion is opposite the end of the second wrapping portion. For example, in FIG. 2, the end of the first wrapping portion is on the left side, and the end of the second wrapping portion is on the right side. In this case, even if the left and right sides inside the electrode assembly are wrapped with the first wrapping portion and the second wrapping portion, respectively, the first wrapping portion and the second wrapping portion may not overlap each other, and an electrode assembly with an efficient structure can be manufactured.

According to one embodiment of the present invention, the number of stack portions (10A, 10A') in the electrode assembly (1) may be one more than the number of positive electrodes (20). As described above, if 2n (wherein n is a natural number) total positive electrodes (20) are to be located between the stack portions, the number of stack portions (10A, 10A') is 2n+1 (wherein n is a natural number).

According to one embodiment of the present invention, the positive electrode (20) comprises a positive electrode active material layer (not shown in the drawing), and a current collector supporting the positive electrode active material (not shown in the drawing). The positive electrode (20) has a structure in which a positive electrode active material layer is formed on at least one side, more specifically on both sides, of the current collector. The positive electrode active material layer comprises a positive electrode active material and may further comprise a conductive material, a binder and an additive. The current collector, positive electrode active material, conductive material, binder or additive is not particularly limited as long as it is commonly used in the art.

The positive electrode current collector supports the positive electrode active material layer and is not particularly limited to having a high conductivity without causing any chemical changes in the battery. According to one embodiment of the present invention, the positive electrode current collector may be made of copper, stainless steel, aluminum, nickel, titanium, palladium, calcined carbon, copper or stainless steel whose surface is treated with carbon, nickel or silver, or aluminum-cadmium alloy.

The positive electrode current collector can form microscopic irregularities on its surface to strengthen the binding with the positive electrode active material, and various forms can be used, such as films, sheets, foils, meshes, nets, porous materials, foams, non-woven materials, etc.

As the positive electrode active material, a lithium-containing transition metal oxide may be used. According to one embodiment of the present invention, any one or a mixture of the two or more selected from the group consisting of LiCoO₂, LiNiO₂, LiMnO₂, LiMn₂O₄, Li(NiₐCo_{b}Mn_{c})O₂ (wherein o<a<1, 0<b<1, 0<c<1, and a+b+c=1), LiNi_{1-y}Co_{y}O₂ (wherein 0<y<1), LiCo_{1-y}Mn_{y}O₂ (wherein 0<y<1), LiNi_{1-y}Mn_{y}O₂ (wherein 0<y<1), Li(NiₐCo_{b}Mn)O₄ (wherein 0<a<2, 0<b<2, 0<c<2, and a+b+c=2), LiMn_{2-z}Ni_{z}O₄ (wherein 0<z<2), LiMn_{2-z}Co_{z}O₄ (wherein 0<z<2), LiCoPO₄ and LiFePO₄. In addition to these oxides, sulfides, selenides or halides can be used.

The positive electrode active material may comprise a sulfur compound. According to one embodiment of the present invention, the sulfur compound may be at least one selected from the group consisting of elemental sulfur (S₈), organosulfur compound Li₂Sₙ (wherein n≥1), and carbon-sulfur polymer ((C₂Sₓ)ₙ, wherein x is 2.5 to 50, and n≥1). Preferably, inorganic sulfur (S₈) may be used.

When the positive electrode active material comprises a sulfur compound, the electrode assembly (1) according to one embodiment of the present invention can be applied to a lithium-sulfur battery. Since the sulfur itself contained in the positive electrode active material is not electrically conductive, it may be used in combination with a conductive material such as a carbon material. Accordingly, the sulfur is included in the form of a sulfur-carbon composite, and preferably, the positive electrode active material may be a sulfur-carbon composite.

In view of the foregoing, the positive electrode (20) is relatively less easily folded and more easily cut compared to the negative electrode. Thus, the positive electrode (20) may be cut to a suitable size so that a plurality of positive electrodes are applied to the interior of the electrode assembly (1).

According to one embodiment of the present invention, the negative electrode (11) does not include a current collector supporting the lithium metal layer. Since the negative electrode (11) does not include a current collector, the loading amount of the negative electrode active material within the electrode assembly can be improved, which can contribute to improved performance of the battery. When the negative electrode (11) is mainly composed of lithium metal, it may not be easy to process, such as cutting, because the lithium metal is highly ductile and viscous, but in the electrode assembly (1) according to one embodiment of the present invention, the processability can be improved by minimizing cutting while the negative electrode is applied in the form of the negative electrode structure (10). The lithium metal layer according to one embodiment of the present invention may be a free-standing lithium metal layer that can retain the shape to a certain level by itself.

The separating film (12) covering both sides of the negative electrode (11) in the negative electrode structure (10) is not particularly limited in terms of type, provided that it does not include a binder on its surface. The separating film (12) may be a nonwoven or polyolefin-based porous material made of, for example, a glass fiber having a high melting point or a polyethylene terephthalate fiber, but is not limited thereto.

The material of the porous material is not particularly limited in the present invention, but any porous material conventionally used in electrochemical devices can be used. According to one embodiment of the present invention, the porous material may include at least one selected from the group consisting of polyolefin such as polyethylene or polypropylene, polyester such as polyethyleneterephthalate or polybutyleneterephthalate, polyamide, polyacetal, polycarbonate, polyimide, polyetheretherketone, polyethersulfone, polyphenyleneoxide, polyphenylenesulfide, polyethylenenaphthalate, polytetrafluoroethylene, polyvinylidene fluoride, polyvinyl chloride, polyacrylonitrile, cellulose, nylon, poly(p-phenylene benzobisoxazole), and polyarylate.

According to one embodiment of the present invention, the lengths of the negative electrode (11) and the first and second separating films (12) in the negative electrode structure (10) are the same. With reference to the end of the negative electrode structure (10) where the wrapping portion (10C) is located, the separating film located on the exterior of the electrode assembly (1) may be named the first separating film, and the separating film located on the interior of the electrode assembly (1) may be named the second separating film. The negative electrode (11) and the separating film (12) are provided to the electrode assembly (1) in the form of a negative electrode structure (10) having the negative electrode (11) interposed between the first and second separating films (12), wherein the negative electrode and the separating film are cut at one time, so that the lengths of the negative electrode (11) and the first and second separating films (12) in the negative electrode structure (10) are substantially the same, as shown in FIG. 1. However, depending on the method of cutting the negative electrode structure (10), there may be slight differences in the lengths of the negative electrode (11) and the first and second separating films (12), and in some cases, the ends of the first and second separating films (12) may be bent toward the center of the negative electrode structure (10). According to one embodiment of the present invention, the first and second separating films are folded at the end of the negative electrode structure (10). Although the negative electrode structure (10) has substantially the same length of the negative electrode (11) and the first and second separating films (12) during the supplying process, when applied to the electrode assembly (1), the length of the lithium metal may be extended due to the ductility of the lithium metal during the folding process. According to one embodiment of the present invention, at the end of the negative electrode structure (10) on the side of the wrapping portion (10C), the lithium metal protrudes longer than the first and second separating film. Also, depending on the number of folds, the separating film located more on the outer side than on the inner side of the folding portion (10B) may be shorter. According to one embodiment of the present invention, the first separating film protrudes longer than the second separating film at the end of the negative electrode structure (10) on the side of the first or second wrapping portion (10C). According to one embodiment of the present invention, the second separating film protrudes longer than the first separating film at the end of the negative electrode structure (10) on the side of the first or second wrapping portion (10C).

According to one embodiment of the present invention, the end of the first wrapping portion is located on a stack portion (10A') where the first wrapping portion turns to wrap around one side of an adjacent electrode assembly and abuts the second wrapping portion, and the end of the second wrapping portion is located on a stack portion where the second wrapping portion turns to wrap around one side of the adjacent electrode assembly and abuts the first wrapping portion. The stack portion refers to the outermost stack portion (10A'). The ends of the first and second wrapping portions may be positioned in various ways on the outermost stack portion (10A'). According to one embodiment of the present invention, the first and second wrapping portions, respectively located on the stack portion, do not overlap each other in the thickness direction. The longer the first and second wrapping portions are spaced apart in the thickness direction, the less the amount of negative electrode structure is required, which can be efficient. According to one embodiment of the present invention, the first wrapping portion and the second wrapping portion, each located on the stack portion, overlap each other in the thickness direction. The longer the first wrapping portion and the second wrapping portion are overlapped in the thickness direction, the more stable the electrode structure can be. According to one embodiment of the present invention, the end of the first wrapping portion and the end of the second wrapping portion are located on the same line in the thickness direction. The position relationship in the thickness direction described above shows whether the first or second wrapping portion overlaps, does not overlap, or has its ends touching each other when the first or second wrapping portion is moved in the thickness direction.

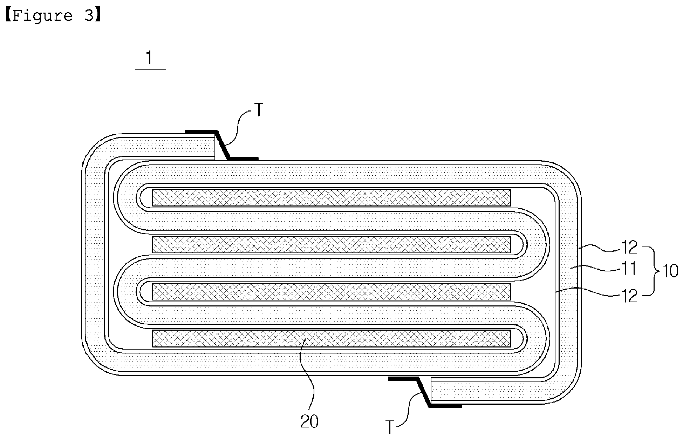

According to one embodiment of the present invention, the ends of the first and second wrapping portions (10C) located on the outermost stack portion may be attached to the outermost stack portion (10A'). As long as the end of the first or second wrapping portion (10C) can be effectively attached to the outermost stack portion (10A'), the means and methods for the attachment are not particularly limited. According to one embodiment of the present invention, the electrode assembly (1) further comprises a fixing member for securing the end of the first or second wrapping portion (10C) to the outermost stack portion (10A'). To provide a better understanding of where the end of the wrapping portion (10C) is attached in the negative electrode structure (10), FIG. 3 provides an exemplary structure of an electrode assembly in which the end of the wrapping portion is attached by a fixing member in the negative electrode structure. Although the negative electrode (11) and the separating film (12) in the negative electrode structure (10) are not bonded, according to the electrode assembly in FIG. 3, both ends of the negative electrode structure (10) can be fixed to form a stable structure. As shown in FIG. 3, it may be desirable to attach the tape (T) as a fixing member to wrap around the outer surface of the electrode assembly (1). According to one embodiment of the present invention, the tape (T) has insulating properties and covers the entire end of the wrapping portion (10C) in the width direction, while taking into consideration the situation in which the lithium metal is extended and protruded due to the ductility of the lithium metal in the process of folding the negative electrode structure (10) when manufacturing the electrode assembly (1). By this taping method, the electrode assembly (1) is covered with a separating film or a tape from top to bottom and left to right.

In manufacturing the electrode assembly (1), when the stack portions (10A, 10A') of the negative electrode structure (10) and the positive electrode (20) are stacked alternately, the negative electrode structure (10) is folded according to the same criteria, so that the folding portion (10B) also has substantially the same length. The negative electrode structure (10) utilizes a particular form of mandrel to apply the same criteria when folding. If the folding portion (10B) has a shorter length, an unnecessary load is imposed on the lithium metal located in the center of the negative electrode structure (10), resulting in a defect such as a break in the lithium metal. Therefore, securing a sufficient length of the folding portion (10B) above a certain level enables the lithium metal to be flexibly disposed in the void between the portion in which the electrodes are stacked and the wrapping portion.

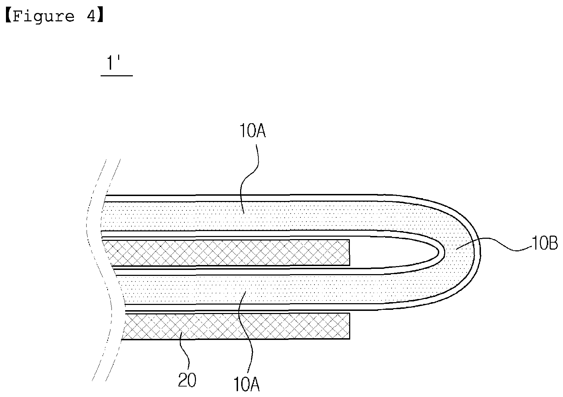

For better understanding of the length of the folding portion (10B) in the negative electrode structure (10), FIG. 4 provides a zoomed-in drawing of a portion of the folding portion (10B) in the electrode assembly (1). According to one embodiment of the present invention, the length of the folding portion (10B) in the negative electrode structure (10) is from 2 to 10 times the sum of the thicknesses of the positive electrode (20) and the negative electrode structure (10). The length of the folding portion (10B) means the length of the curve of the folding portion. In a curve, since the lengths of the inner and outer sides may be different from each other, the length of the center portion is measured. For example, the length can be measured by cutting the portion indicated by the dotted line in FIG. 4 and then unfolding it. Specifically, the length of the folding portion (10B) may be 2 times or more, 2.5 times or more, 3 times or more, 3.5 times or more, 4 times or more, 10 times or less, 9.5 times or less, 9 times or less, 8.5 times or less, 8 times or less, 2 to 10 times, 3 to 9 times, or 4 to 8 times the sum of the thicknesses of the positive electrode (20) and the negative electrode structure (10). When the length of the folding portion (10B) is adjusted within the range, the defect of the folding portion in the electrode assembly can be reduced, and the electrode assembly can be stably wrapped.

The length of the folding portion (10B) described above indicates that it is formed longer as shown in FIG. 4, rather than it is folded into a semicircle as shown in FIG. 2. Specifically, when the folding portion (10B) has the form of a complete semicircle with an eccentricity of 0, the length of the folding portion becomes the sum of the thicknesses of the positive electrode (20) and the negative electrode structure (10), which are the diameter, multiplied by π and divided by 2. This is approximately 1.57 times the sum of the thicknesses of the positive electrode (20) and the negative electrode structure (10). Based on this, it can be seen that the length of the folding portion (10B) according to one embodiment of the present invention is significantly long.

In manufacturing the electrode assembly (1), after stacking the stack portions (10A, 10A') of the negative electrode structure (10) and the positive electrode (20) in an alternating manner, and wrapping the electrode laminate by the wrapping portion (10C), the folding portion (10B) is subjected to a certain level of pressure in the inner direction of the electrode assembly (1). Accordingly, the folding portion (10B) can be appropriately disposed in the void between the portion on which the electrodes are stacked and the wrapping portion. Since the folding portion (10B) suitably disposed in the void includes the lithium metal layer (11) therein, it can contribute to further battery performance improvement by electrochemical reaction with the positive electrode (20) on the side thereof. Two or more lithium metal layers may also be located on the side of the positive electrode not wrapped by the folding portion (10B) as the folding portion (10B) appropriately fills the void. When wrapping the electrode laminate by the wrapping portion (10C) so that the wrapping portion (10C) has a tension above a certain level, it helps to maintain the structure of the electrode laminate located in the electrode assembly (1) without distortion.

According to one embodiment of the present invention, the folding portion (10B) has an asymmetrical shape with respect to a plane along the longitudinal direction. This asymmetrical shape is formed as the folding portion (10B) is pressed in the longitudinal direction by the wrapping portion (10C) so that the folding portion (10B) is properly positioned in the void. According to one embodiment of the present invention, a center point of the length of the folding portion (10B) is not aligned with a center point of the thickness of the positive electrode that the folding portion (10B) wraps around. The center point of the length of the folding portion (10B) may be oriented in the direction of the wrapping relative to the center point of the thickness of the positive electrode. For example, referring to FIG. 2, the folding portion located on the right side of the electrode laminate may have a center point of the length of the folding portion below the center point of the thickness of the positive electrode because the wrapping proceeds from top to bottom. In contrast, the folding portion on the left side of the electrode laminate may have a center point of the length of the folding portion above the center point of the thickness of the positive electrode because the wrapping proceeds from bottom to top.

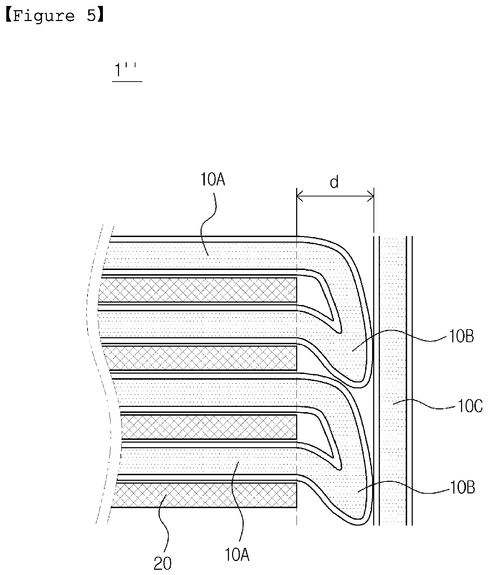

To provide a better understanding of the vertical distance between the end of the positive electrode (20) and the lateral wrapping portion (10C), which is the basis for comparing the length of the folding portion (10B) below, FIG. 5 provides a zoomed-in drawing of the portion of the electrode assembly (1) where the end of the positive electrode (20) and the lateral wrapping portion (10C) are located. As shown in FIG. 5, the folding portion (10B) may be deformed by pressure applied from the laterally located wrapping portion (10C) during the process of wrapping the electrode assembly. However, FIG. 5 is only an exemplary structure and the folding portion (10B) does not necessarily have the deformation to this shape. Due to the pressure, the distance (d) between the end of the positive electrode (20) and the lateral wrapping portion (10C) may be shortened, and, as the distance (d) is shortened, the folding portion (10B) may be naturally disposed within the shortened space. According to one embodiment of the present invention, the length of the folding portion (10B) in the electrode assembly (1) is from 2 to 10 times the vertical distance (d) between the end of the positive electrode (20) and the lateral wrapping portion (10C). The lateral wrapping portion (10C) refers to a straight-shaped wrapping portion (10C) located on the left or right side of the electrode assembly in FIG. 2 or FIG. 3. If the corresponding portion in the actual electrode assembly is not straight, the vertical distance (d) is measured as the vertical distance from the lateral wrapping portion to the end of the positive electrode at the center portion of the electrode laminate in the thickness direction. Alternatively, the vertical distance (d) can be measured as the average value of the vertical distance from the end of the positive electrode (20) to the portion where the wrapping portion (10C) abuts the folding portion (10B) on one side. Specifically, the length of the folding portion (10B) may be 2 times or more, 2.5 times or more, 3 times or more, 3.5 times or more, 4 times or more, 10 times or less, 9.5 times or less, 9 times or less, 8.5 times or less, 8 times or less, 2 times to 10 times, 3 times to 9 times, or 4 times to 8 times the vertical distance (d) between the end of the positive electrode (20) and the lateral wrapping portion (10C). This means that the length of the folding portion (10B) is significantly longer as described above, but the vertical distance (d) is also shorter, so that the folding portion is compactly packed in the lateral space of the electrode laminate. When the length of the folding portion (10B) is adjusted within the range, the folding portion can be compactly packed into the void in the electrode assembly to an appropriate degree without exerting excessive pressure on the folding portion by wrapping of the electrode assembly, thereby contributing to improved performance of the battery.

In that the electrode assembly (1) according to one embodiment of the present invention forms the basic structure of the electrode assembly (1) by folding one negative electrode structure (10), the negative electrode structure (10) should not be excessively thick so that it can be flexibly folded, and a certain level of lithium metal, a negative electrode active material, should be secured in the negative electrode structure (10) in consideration of the performance of the battery. According to one embodiment of the present invention, the thickness of the lithium metal in the negative electrode structure (10) accounts for 50% to 90% based on the total thickness of the negative electrode structure (10). Specifically, the thickness of the lithium metal may range from 50% to 90%, specifically from 55% to 85%, and more specifically from 60% to 80%. When the lithium metal satisfies the above-mentioned thickness range, it can help improve the processability and functionality of the electrode assembly. According to one embodiment of the present invention, since the negative electrode structure (10) does not include a separate current collector, the thickness of the remaining portion excluding the lithium metal may refer to the thickness of two separating films.

According to one embodiment of the present invention, the thickness of the lithium metal may be from 10 µm to 90 µm. Specifically, the thickness of the lithium metal may be 10 µm or more, 20 µm or more, or 30 µm or more, and may be 70 µm or less, 80 µm or less, or 90 µm or less. The thickness of the lithium metal is not necessarily limited thereto, and may be appropriately adjusted according to the actual size of the battery.

In the electrode assembly (1) according to one embodiment of the present invention, unlike the negative electrode structure (10), the positive electrode is cut in consideration of characteristics such as material, and applied between the stack portions (10A, 10A') of the negative electrode structure (10). Although the positive electrode is distinct and independent from the negative electrode, in terms of, such as, including a current collector in addition to the positive electrode active material, the thickness may be adjusted in relation to the negative electrode or the negative electrode structure in consideration of the performance of the electrode. According to one embodiment of the present invention, the thickness of the positive electrode (20) is greater than the thickness of the negative electrode structure (10). According to one embodiment of the present invention, the thickness of the positive electrode (20) has a thickness of more than 100% and less than 400% with respect to the thickness of the negative electrode structure (10). Specifically, the thickness of the positive electrode (20) may range from 100% greater than or less than 400%, specifically from 150% to 350%, and more specifically from 200% to 300%. When the positive electrode satisfies the above-described thickness range, it can be suitably matched with the negative electrode structure.

Hereinafter, the detailed description on a process for manufacturing the electrode assembly is provided. To facilitate an understanding of the manufacturing process of the electrode assembly, FIG. 6 schematically illustrates a process and a state in the manufacturing process of the electrode assembly.

A manufacturing process for the electrode assembly according to one embodiment of the present invention includes the steps of (1) folding a negative electrode structure to form an electrode laminate in which a positive electrode and a negative electrode structure are alternatively stacked; (2) surrounding the electrode laminate with extra negative electrode structure after manufacturing the electrode laminate; and (3) positioning and securing the end of the negative electrode structure to the top of the electrode laminate.

The step (1) is exemplarily manufactured through the process as shown in FIG. 6a. As shown in FIG. 6a, the negative electrode structure and the positive electrode can be stacked sequentially, with the negative electrode structure at the bottom and the positive electrode thereon. Also, although not shown in FIG. 6a, a device such as a mandrel may be utilized to fold the negative electrode structure so that the folds at each location are made according to the same criteria. Stacking starts from not the end of the negative electrode structure, but stack portion in contact with a first wrapping portion, with the first wrapping portion remained enough to cover one side of the electrode laminate later. The step (2) is exemplarily manufactured through the process as shown in FIG. 6b. The extra negative electrode structure is present at both ends as first and second wrapping portions, and the first and second wrapping portions each wrap the side of an adjacent electrode laminate. During the process of wrapping with the extra negative electrode structure, wrapping the negative electrode structure so that the negative electrode structure is under a certain level of tension helps to compactly pack the folding portion within the void and helps the structure of the electrode laminate to maintain its shape without distortion. After the step (3), the finished electrode assembly is in a state as shown in FIG. 6c or FIG. 6d. The wrapping has the effect of preventing the positive electrode from flowing down between the stack portions, and considering this function, it may be desirable to position the end of the negative electrode structure at the top of the electrode laminate. By securing the negative electrode structure, the tension applied to the negative electrode structure during the wrapping process may be maintained, and wrapping with tape (T) as shown in FIG. 6d may be an exemplary method.

Specific characteristics of the positive electrode and negative electrode structures not specifically described in the manufacturing process are in accordance with the foregoing. An electrode assembly according to one embodiment of the present invention can weld multiple layers of tabs and leads, such as in conventional large capacity cells, to maintain performance such as cell resistance and output.

An electrode assembly according to one embodiment of the present invention is applied to an electrochemical device. The electrochemical device may comprise any device that performs an electrochemical reaction. For example, the electrochemical device may be any kind of primary battery, secondary battery, fuel battery, solar battery or capacitor. If the electrochemical device is a secondary battery, the electrochemical device may be a lithium secondary battery, which may include a lithium metal secondary battery, a lithium ion secondary battery, a lithium polymer secondary battery or a lithium ion polymer secondary battery.

As shown above, although the embodiments have been described by limited examples and drawings, one of ordinary skill in the art can make various modifications and variations in view of the above descriptions. For example, even if the provided techniques may be performed in a different order from the above-described methods, and/or the provided components such as the systems, structures, devices, circuits, etc. may be combined in a different form from the above-described methods, or substituted or replaced by other components or equivalents, the desired results can be achieved.

Hereinafter, Examples are presented to facilitate an understanding of the present invention. The following Examples are provided to illustrate the present invention, but the present invention is not limited thereto.

### Example

### Example 1: Manufacture of an electrode assembly wrapped with a negative electrode structure

The negative electrode structure was prepared by interposing 60 µm of lithium metal between two polyethylene (PE) separating films (11 µm). In addition, a positive electrode compound composed of 85 wt% of positive electrode active material prepared by mixing sulfur and carbon nanotubes (CNTs) in a weight ratio of 7 : 3, 5 wt% of carbon nanofiber as a conductive material, and 10 wt% of binder was added to deionized water to prepare a positive electrode slurry, and then an aluminum collector was coated with the positive electrode slurry to produce a 200 µm positive electrode.

The manufactured negative electrode structures were folded to make an electrode laminate in the manner shown in FIG. 6a, and then the electrode laminate was wrapped with extra negative electrode structures in the manner shown in FIG. 6b to make an electrode assembly as shown in FIG. 6c. The exposed end of the negative electrode structure in the electrode assembly was fixed with insulating tape as shown in FIG. 6d. In the electrode assembly, the length of the folding portion was measured as 1,453 µm, and the vertical distance between the end of the positive electrode and the lateral wrapping portion was measured as 268 µm.

### Comparative Example 1: Manufacture of an electrode assembly in which the negative electrode structure is cut and laminated

The negative electrode structure was cut to fit the positive electrode of each layer, and then the positive electrode and the negative electrode structure were laminated to form an electrode laminate, and the electrode assembly was completed without any separate wrapping with the negative electrode structure. In the electrode assembly, the material and thickness of the positive electrode and the negative electrode structure were the same as in Example 1.

### Experimental Example

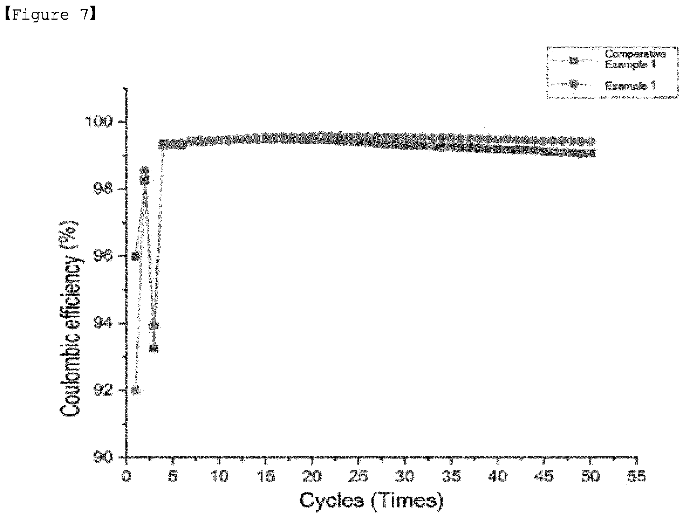

Each electrode assembly prepared according to Example 1 and Comparative Example 1 was placed in the same pouch, and the ether-based electrolyte is charged with 0.4 M of LiFSI salt and 4 wt% of LiNO₃ to prepare a lithium secondary battery. The Coulombic efficiency of the prepared lithium secondary battery was measured by charging and discharging it at 0.3C, and the results are shown in FIG. 7.

Not only does the electrode assembly according to the present invention have advantages over conventional electrode assemblies in terms of process, but according to FIG. 7, it can be seen that the long-term performance of the battery, such as Coulombic efficiency, can also be improved.

All simple variations or modifications of the present invention fall within the scope of the present invention, and the specific scope for which protection is sought is to be clear by the appended claims.

### [Reference Numerals]

1, 1', 1": Electrode assembly
10: Negative electrode structure
10A, 10A': Stack portion (10A': Outermost stack portion)
10B: Folding portion
10C: Wrapping portion (First and second wrapping portions)
11: Negative electrode (Lithium metal layer)
12: Separating film (First and second separating films)
20: Positive electrode
T: Fixing member (Tape)
d: Vertical distance between the end of the positive electrode and the lateral wrapping portion

## Claims

1. An electrode assembly (1, 1', 1") comprising a negative electrode structure (10) and a plurality of positive electrodes (20),
wherein the negative electrode structure (10) comprises first and second separating films (12), and a lithium metal layer (11) interposed between the first and second separating films (12),
wherein the negative electrode structure (10) is divided into a plurality of stack portions (10A, 10A'), a plurality of folding portions (10B), and first and second wrapping portions (10C) according to their positions in the electrode assembly (1, 1', 1"),
wherein the plurality of stack portions (10A, 10A') are sequentially positioned side by side in the thickness direction by the folding portion (10B), and at least one positive electrode (20) is positioned between the stack portions (10A, 10A') adjacent to each other in the thickness direction,
**characterized in that**
the stack portions (10A, 10A') and the folding portions (10B) are located alternately between the first and second wrapping portions (10C) located at the end of the negative electrode structure (10), respectively, in a longitudinal direction, and the first and second wrapping portions (10C) abut the stack portion (10A, 10A'),
wherein the exterior in the thickness direction and the longitudinal direction is surrounded by the first and second wrapping portions (10C), or the first and second wrapping portions (10C) and at least one outermost stack portion (10A'), wherein the lithium metal layer (11) and the first and second separating films (12) in the negative electrode structure (10) have substantially the same length.

2. The electrode assembly (1, 1', 1") according to claim 1, wherein the first and second wrapping portions (10C) wrap the interior of the electrode assembly (1) with a higher tension compared to the stack portions (10A, 10A') or the folding portion (10B), which causes the internal constitutions of the electrode assembly (1) to be compressed in the thickness direction.

3. The electrode assembly (1, 1', 1") according to claim 1, wherein the first wrapping portion (10C) and the second wrapping portion (10C) do not contact each other.

4. The electrode assembly (1, 1', 1") according to claim 1, wherein the first wrapping portion (10C) and the second wrapping portion (10C) have the same length as each other.

5. The electrode assembly (1, 1', 1") according to claim 1, wherein the first wrapping portion (10C) and the second wrapping portion (10C) are secured to different outermost stack portions (10A, 10A').

6. The electrode assembly (1, 1', 1") according to claim 1, wherein in the electrode assembly (1, 1', 1"), one positive electrode (20) is positioned between the stack portions (10A, 10A') adjacent to each other in the thickness direction, and
the total number of the positive electrodes (20) located between the stack portions (10A, 10A') is 2n, wherein n is a natural number.

7. The electrode assembly (1, 1', 1") according to claim 1, wherein the positive electrode (20) comprises a positive electrode (20) active material layer, and a current collector supporting the positive electrode (20) active material layer, and the negative electrode structure (10) does not comprise a current collector supporting the lithium metal layer (11).

8. The electrode assembly (1, 1', 1") according to claim 1, wherein, in the negative electrode structure (10), the end of the first wrapping portion (10C) is located on a stack portion (10A, 10A') abutting the second wrapping portion (10C), wherein the first wrapping portion (10C) turns to wrap around one side of the adjacent electrode assembly (1, 1', 1"), and the end of the second wrapping portion (10C) is located on a stack portion (10A, 10A') abutting the first wrapping portion (10C), wherein the second wrapping portion (10C) turns to wrap around one side of the adjacent electrode assembly (1, 1', 1").

9. The electrode assembly (1, 1', 1") according to claim 1, wherein the electrode assembly (1, 1', 1") further comprises a fixing member (T) for securing the ends of the first and second wrapping portions (10C) to the outermost stack portion (10A, 10A'), respectively.

10. The electrode assembly (1, 1', 1") according to claim 1, wherein the length of the folding portion (10B) in the negative electrode structure (10) is from 2 to 10 times the sum of the thicknesses of the positive electrode (20) and the negative electrode structure (10).

11. The electrode assembly (1, 1', 1") according to claim 1, wherein, in the negative electrode structure (10), the length of the folding portion (10B) is from 2 to 10 times the vertical distance (d) between the end of the positive electrode (20) and the lateral wrapping portion (10C) surrounding it.

12. The electrode assembly (1, 1', 1") according to claim 1, wherein the folding portion (10B) has an asymmetrical shape with respect to a plane along the longitudinal direction.

13. The electrode assembly (1, 1', 1") according to claim 1, wherein the thickness of the lithium metal layer (11) in the negative electrode structure (10) is from 50% to 90% based on the overall thickness of the negative electrode structure (10).

14. An electrochemical device comprising the electrode assembly (1, 1', 1") according to any one of claims 1 to 13.

## Patentansprüche

1. Elektrodenbaugruppe (1, 1', 1"), umfassend eine negative Elektrodenstruktur (10) und eine Vielzahl von positiven Elektroden (20),
wobei die negative Elektrodenstruktur (10) einen ersten und einen zweiten Separatorfilm (12) und eine Lithiummetallschicht (11), die zwischen dem ersten und dem zweiten Separatorfilm (12) angeordnet ist, umfasst,
wobei die negative Elektrodenstruktur (10) unterteilt ist in eine Vielzahl von Stapelabschnitten (10A, 10A'), eine Vielzahl von Faltabschnitten (10B) sowie einen ersten und einen zweiten Umgreif-Abschnitt (10C) gemäß ihren Positionen in der Elektrodenbaugruppe (1, 1', 1"),
wobei die Vielzahl von Stapelabschnitten (10A, 10A') durch den Faltabschnitt (10B) in der Dickenrichtung sequentiell Seite an Seite positioniert sind und mindestens eine positive Elektrode (20) zwischen den in der Dickenrichtung zueinander benachbarten Stapelabschnitten (10A, 10A') positioniert ist,
**dadurch gekennzeichnet, dass**
die Stapelabschnitte (10A, 10A') und die Faltabschnitte (10B) sind abwechselnd zwischen dem ersten und dem zweiten Umgreif-Abschnitt (10C) angeordnet, die jeweils in einer Längsrichtung an dem Ende der negativen Elektrodenstruktur (10) angeordnet sind, wobei der erste und der zweite Umgreif-Abschnitt (10C) an dem Stapelabschnitt (10A, 10A') anliegen,
wobei die Außenseite in der Dickenrichtung und der Längsrichtung von dem ersten und dem zweiten Umgreif-Abschnitt (10C) oder dem ersten und dem zweiten Umgreif-Abschnitt (10C) und mindestens einem äußersten Stapelabschnitt (10A') umgeben ist, wobei die Lithiummetallschicht (11) und der erste und der zweite Separatorfilm (12) in der negativen Elektrodenstruktur (10) im Wesentlichen die gleiche Länge aufweisen.

2. Elektrodenbaugruppe (1, 1', 1") nach Anspruch 1, wobei der erste und der zweite Umgreif-Abschnitt (10C) das Innere der Elektrodenbaugruppe (1) mit einer höheren Spannung im Vergleich zu den Stapelabschnitten (10A, 10A') oder dem Faltabschnitt (10B) umgreifen, was bewirkt, dass die inneren Strukturen der Elektrodenbaugruppe (1) in der Dickenrichtung zusammengedrückt werden.

3. Elektrodenbaugruppe (1, 1', 1") nach Anspruch 1, wobei der erste Umgreif-Abschnitt (10C) und der zweite Umgreif-Abschnitt (10C) einander nicht berühren.

4. Elektrodenbaugruppe (1, 1', 1") nach Anspruch 1, wobei der erste Umgreif-Abschnitt (10C) und der zweite Umgreif-Abschnitt (10C) die gleiche Länge aufweisen.

5. Elektrodenbaugruppe (1, 1', 1") nach Anspruch 1, wobei der erste Umgreif-Abschnitt (10C) und der zweite Umgreif-Abschnitt (10C) an verschiedenen äußersten Stapelabschnitten (10A, 10A') festgelegt sind.

6. Elektrodenbaugruppe (1, 1', 1") nach Anspruch 1, wobei in der Elektrodenbaugruppe (1, 1', 1") eine positive Elektrode (20) zwischen den in der Dickenrichtung zueinander benachbarten Stapelabschnitten (10A, 10A') positioniert ist, und
die Gesamtzahl der positiven Elektroden (20), die zwischen den Stapelabschnitten (10A, 10A') angeordnet sind, 2n beträgt, wobei n eine natürliche Zahl ist.

7. Elektrodenbaugruppe (1, 1', 1") nach Anspruch 1, wobei die positive Elektrode (20) eine Aktivmaterialschicht der positiven Elektrode (20) und einen Stromabnehmer, der die Aktivmaterialschicht der positiven Elektrode (20) trägt, umfasst, und die negative Elektrodenstruktur (10) keinen Stromabnehmer, der die Lithiummetallschicht (11) trägt, umfasst.

8. Elektrodenbaugruppe (1, 1', 1") nach Anspruch 1, wobei in der negativen Elektrodenstruktur (10) das Ende des ersten Umgreif-Abschnitts (10C) an einem Stapelabschnitt (10A, 10A') angeordnet ist, der an dem zweiten Umgreif-Abschnitt (10C) anliegt, wobei sich der erste Umgreif-Abschnitt (10C) dreht, um eine Seite der benachbarten Elektrodenbaugruppe (1, 1', 1") zu umgreifen, und das Ende des zweiten Umgreif-Abschnitts (10C) an einem Stapelabschnitt (10A, 10A') angeordnet ist, der an dem ersten Umgreif-Abschnitt (10C) anliegt, wobei sich der zweite Umgreif-Abschnitt (10C) dreht, um eine Seite der benachbarten Elektrodenbaugruppe (1, 1', 1") zu umgreifen.

9. Elektrodenbaugruppe (1, 1', 1") nach Anspruch 1, wobei die Elektrodenbaugruppe (1, 1', 1") ferner ein Befestigungselement (T) zum jeweiligen Festlegen der Enden des ersten und des zweiten Umgreif-Abschnitts (10C) an dem äußersten Stapelabschnitt (10A, 10A') umfasst.

10. Elektrodenbaugruppe (1, 1', 1") nach Anspruch 1, wobei die Länge des Faltabschnitts (10B) in der negativen Elektrodenstruktur (10) das 2- bis 10-fache der Summe der Dicken der positiven Elektrode (20) und der negativen Elektrodenstruktur (10) beträgt.

11. Elektrodenbaugruppe (1, 1', 1") nach Anspruch 1, wobei in der negativen Elektrodenstruktur (10) die Länge des Faltabschnitts (10B) das 2- bis 10-fache des vertikalen Abstands (d) zwischen dem Ende der positiven Elektrode (20) und dem sie umgebenden seitlichen Umgreif-Abschnitt (10C) beträgt.

12. Elektrodenbaugruppe (1, 1', 1") nach Anspruch 1, wobei der Faltabschnitt (10B) eine asymmetrische Form in Bezug auf eine Ebene entlang der Längsrichtung aufweist.

13. Elektrodenbaugruppe (1, 1', 1") nach Anspruch 1, wobei die Dicke der Lithiummetallschicht (11) in der negativen Elektrodenstruktur (10) 50 % bis 90 %, bezogen auf die Gesamtdicke der negativen Elektrodenstruktur (10), beträgt.

14. Elektrochemische Vorrichtung, umfassend die Elektrodenbaugruppe (1, 1', 1") nach einem der Ansprüche 1 bis 13.

## Revendications

1. Ensemble d'électrodes (1, 1', 1'') comprenant une structure d'électrode négative (10) et une pluralité d'électrodes positives (20),
la structure d'électrode négative (10) comprenant des première et deuxième pellicules de séparation (12), ainsi qu'une couche de lithium métal (11) intercalée entre les première et deuxième pellicules de séparation (12),
la structure d'électrode négative (10) étant divisée en une pluralité de parties d'empilement (10A, 10A'), une pluralité de parties de pliage (10B), et des première et deuxième parties d'enroulement (10C) en fonction de leur emplacement dans l'ensemble d'électrodes (1, 1', 1''),
la pluralité de parties d'empilement (10A, 10A') étant positionnées en séquence côte à côte dans le sens de l'épaisseur par la partie de pliage (10B), et au moins une électrode positive (20) étant positionnée entre les parties d'empilement (10A, 10A'), adjacentes entre elles dans le sens de l'épaisseur,
**caractérisé en ce que**
les parties d'empilement (10A, 10A') et les parties de pliage (10B) sont positionnées en alternance entre les première et deuxième parties d'enroulement (10C) situées au bout de la structure d'électrode négative (10), respectivement, dans le sens longitudinal, et les première et deuxième parties d'enroulement (10C) jouxtent la partie d'empilement (10A, 10A'),
l'extérieur dans le sens de l'épaisseur et le sens longitudinal étant entourés par les première et deuxième parties d'enroulement (10C), ou les première et deuxième parties d'enroulement (10C) et au moins une partie d'empilement extérieure (10A'), la longueur de la couche de lithium métal (11) et celle des première et deuxième pellicules de séparation (12) dans la structure d'électrode négative (10) étant substantiellement égales.

2. Ensemble d'électrodes (1, 1', 1'') selon la revendication 1, la première et la deuxième parties d'enroulement (10C) enveloppant l'intérieur de l'ensemble d'électrodes (1) avec une tension supérieure par rapport aux parties d'empilement (10A, 10A') ou à la partie de pliage (10B), en donnant lieu ainsi à des compositions internes de l'ensemble d'électrodes (1) à comprimer dans le sens de l'épaisseur.

3. Ensemble d'électrodes (1, 1', 1'') selon la revendication 1, la première partie d'enroulement (10C) et la deuxième partie d'enroulement (10C) n'étant pas en contact entre elles.

4. Ensemble d'électrodes (1, 1', 1'') selon la revendication 1, la longueur de la première partie d'enroulement (10C) et celle de la deuxième partie d'enroulement (10C) étant identiques.

5. Ensemble d'électrodes (1, 1', 1'') selon la revendication 1, la première partie d'enroulement (10C) et la deuxième partie d'enroulement (10C) étant fixées à différentes parties d'empilement extérieures (10A, 10A'),

6. Ensemble d'électrodes (1, 1', 1'') selon la revendication 1, dans lequel, dans l'ensemble d'électrodes (1, 1', 1''), une électrode positive (20) est positionnée entre les parties d'empilement extérieures (10A, 10A') adjacentes l'une à l'autre dans le sens de l'épaisseur, et
le nombre total des électrodes positives (20) situées entre les parties d'empilement extérieures (10A, 10A') étant 2n, n étant un nombre entier naturel.

7. Ensemble d'électrodes (1, 1', 1'') selon la revendication 1, l'électrode positive (20) comprenant une couche de matière active d'électrode positive (20) et un collecteur de courant supportant la couche de matière active d'électrode positive (20), et la structure d'électrode négative (10) ne comprenant pas de collecteur de courant supportant la couche de lithium métal (11).

8. Ensemble d'électrodes (1, 1', 1'') selon la revendication 1, dans lequel, dans la structure d'électrode négative (10), le bout de la première partie d'enroulement (10C) est situé sur une partie d'empilement extérieure (10A, 10A') jouxtant la deuxième partie d'enroulement (10C), la première partie d'enroulement (10C) tournant pour s'envelopper autour d'un côté de l'ensemble d'électrodes (1, 1', 1'') adjacent, et le bout de la deuxième partie d'enroulement (10C) étant situé sur une partie d'empilement extérieure (10A, 10A') jouxtant la première partie d'enroulement (10C), la deuxième partie d'enroulement (10C) tournant pour s'envelopper autour d'un côté de l'ensemble d'électrodes (1, 1', 1'').

9. Ensemble d'électrodes (1, 1', 1'') selon la revendication 1, l'ensemble d'électrodes (1, 1', 1'') comprenant en outre un élément de fixation (T) pour fixer les bouts des première et deuxième parties d'enroulement (10C) sur la partie d'empilement extérieure (10A, 10A') respectivement.

10. Ensemble d'électrodes (1, 1', 1'') selon la revendication 1, la longueur de la partie de pliage (10B) dans la structure d'électrode négative (10) mesurant de 2 à 10 fois la somme des épaisseurs de l'électrode positive (20) et de la structure d'électrode négative (10).

11. Ensemble d'électrodes (1, 1', 1'') selon la revendication 1, dans la structure d'électrode négative (10), la longueur de la partie de pliage (10B) mesurant de 2 à 10 fois la distance verticale (d) entre le bout de l'électrode positive (20) et la partie d'enroulement latérale (10C) qui l'entoure.

12. Ensemble d'électrodes (1, 1', 1'') selon la revendication 1, la partie de pliage (10B) ayant une forme asymétrique relativement à un plan dans le sens longitudinal.

13. Ensemble d'électrodes (1, 1', 1'') selon la revendication 1, l'épaisseur de la couche de lithium métal (11) dans la structure d'électrode négative (10) mesurant de 50% à 90% d'après l'épaisseur totale de la structure d'électrode négative (10).

14. Dispositif électrochimique comprenant l'ensemble d'électrodes (1, 1', 1'') selon une quelconque des revendications 1 à 13.
